# FASCICULE DE BREVET EUROPEEN

(11) **EP 1 511 662 B1**
(45) Date de publication et mention de la délivrance du brevet: **01.08.2007**
(21) Numéro de dépôt: 03732462.1
(22) Date de dépôt: 26.05.2003
(51) Int. Cl.: B60T 13/57, F16K 31/126, G05D 16/06

(54) **VALVE PNEUMATIQUE POUR SYSTEMES DE FREINAGE**
DRUCKLUFTVENTIL FÜR BREMSANLAGEN
PNEUMATIC VALVE FOR BRAKING SYSTEMS

(30) Priorité: 29.05.2002 IT TO20020452
(43) Date de publication de la demande: 09.03.2005
(73) Titulaire: VHIT S.p.A., 26013 Crema (IT)
(72) Inventeur: CADEDDU, Leonardo, I-26013 Crema (IT)
(74) Mandataire: Hurwic, Aleksander Wiktor
(86) Numéro de dépôt international: PCT/EP2003/005479
(87) Numéro de publication internationale: WO 2003/099626

(56) Documents cités:
- FR-A- 1 302 261
- FR-A- 1 521 470
- US-A- 2 911 994
- US-A- 3 646 758
- US-A- 3 982 553
- US-A- 4 191 090
- US-A- 4 628 959

## Description

La présente invention se rapporte principalement à une valve pneumatique de limitation du niveau de dépression en particulier à un valve pneumatique de limitation du niveau de basse pression permettant un contrôle accru du niveau de basse pression régnant dans au moins une des chambres d'un servomoteur d'assistance pneumatique au freinage, et à un système de freinage comportant une telle valve.

Les sources de dépression ou aussi appelé source de vide pour servomoteur d'assistance pneumatique au freinage de type connu comporte une pompe à vide pneumatique par exemple une pompe à palettes, en particulier une pompe mono palette comportant une première chambre d'aspiration du fluide pneumatique contenu dans une chambre du servomoteur, appelée chambre à basse pression et une seconde chambre de refoulement dudit fluide pneumatique provenant de la chambre à dépression du servomoteur, dite chambre d'expulsion.

Il est également connu des dispositifs pour lesquels la source de vide est assurée par la dépression moteur d'un moteur à essence du véhicule comportant ledit servomoteur.

US-A-4 191 090 décrit un commutateur pneumatique comportant une première chambre munie d'une entrée connectée à une source de vide, d'une sortie connectée à un moteur pneumatique et d'une entrée reliée à l'atmosphère.

Au repos, les entrées et sorties de la valve sont connectées.

Lorsque le commutateur est activé, l'entrée connectée à l'atmosphère est isolée mais les autres entrées et sorties sont toujours connectées.

US-A-2 911 994 décrit une valve comportant un diaphragme mobile dont les deux faces sont soumises à la pression régnant à la sortie de la valve.

L'ouverture d'une telle valve doit être commandée par une valve de commande calibrée.

Aussi bien la pompe à vide que la dépression moteur permettent d'atteindre une valeur non contrôlable de basse pression, et en particulier pour la dépression moteur, le niveau de basse pression est susceptible de varier en fonction des variations du régime de fonctionnement du moteur.

De plus, il est parfois nécessaire de limiter le niveau de pression du fluide pneumatique fourni au servomoteur à une valeur prédéterminée supérieure à la valeur de basse pression pouvant être atteinte grâce à la source de vide afin d'éviter des problèmes de fonctionnement du servomoteur du fait d'une trop grande différence de pression entre les deux chambres du servomoteur.

Il est connu d'assurer la régulation du niveau de pression régnant dans au moins une chambre d'un servomoteur par la mise en oeuvre d'un capteur de pression mesurant la pression régnant dans la chambre à basse pression du servomoteur et permettant la commande d'une électrovanne interrompant la communication entre le servomoteur et la source de dépression. L'information de la valeur de la pression mesurée par le capteur de pression est transmise à un calculateur électronique qui envoie à l'électrovanne un ordre adapté. Cependant ces dispositifs sont d'un prix de revient élevé du fait du prix d'un capteur de pression, de celui de l'électrovanne et de la complexité de montage du capteur dans le servomoteur et du raccordement électrique au calculateur. De plus, la mise en place du capteur de pression nécessite un orifice pratiqué dans l'enveloppe du servomoteur, l'étanchéité étant réalisé par exemple par un joint, or du fait de la déformation de l'enveloppe du servomoteur lors d'une phase de freinage, la présence d'orifices dans l'enveloppe est susceptible d'être le siège de fuites réduisant le rendement du servomoteur et pénalisant le confort du conducteur sans que celles-ci soient toutefois dangereuses pour le conducteur.

C'est par conséquent un but de la présente invention d'offrir un moyen fiable et de montage facile permettant de limiter dans un élément utilisant un fluide pneumatique à basse pression obtenue par une source de vide, la valeur de la pression dudit fluide pneumatique à une valeur supérieure prédéterminée à la valeur de pression obtenue avec une source de vide.

C'est également un but de la présente invention d'offrir un tel moyen ayant en plus un faible coût de revient.

Ces buts sont atteints par une valve comportant des moyens de clapet, disposée entre une source de vide et un élément utilisant un fluide pneumatique à basse pression obtenu par la source de vide, les moyens de clapet étant sensibles à la variation du niveau de pression obtenu par la source de vide et interrompant l'aspiration du fluide pneumatique dans l'élément par la source de vide lorsque le niveau de pression détecté est inférieur à une valeur prédéterminée.

En d'autres termes, il s'agit d'une valve comportant un obturateur soumis sur une première de ses faces à une basse pression et sur une seconde face opposée à la première face à une haute pression, ledit obturateur étant mobile sous la différence de pression et susceptible d'interrompre la communication entre la source de vide et l'élément, pour une valeur de différence pression prédéterminée.

La présente invention a principalement pour objet une valve pneumatique de limitation du niveau de pression d'un fluide pneumatique obtenue par une source de fluide pneumatique à basse pression à un élément pneumatique utilisant ledit fluide pneumatique, ladite valve comportant un carter dans lequel est montée à coulissement étanche, une jupe, ladite jupe divisant l'intérieur du carter en une première chambre et en une seconde chambre, ledit carter comportant un premier orifice permettant l'alimentation par la source de fluide pneumatique à basse pression de la première chambre, un second orifice mettant en communication la première chambre et l'élément et un troisième orifice permettant l'alimentation en fluide pneumatique à haute pression de la seconde chambre, la première chambre comportant également des moyens élastiques de rappel de la jupe interposés entre la jupe et le carter, caractérisée en ce que ladite jupe comporte des moyens obturateurs, d'au moins un orifices de communication, entre la source de vide et l'élément pneumatique.

La présente invention a également pour objet une valve pneumatique caractérisée en ce que la jupe comporte un obturateur susceptible de coopérer avec un siège formé sur la périphérie du premier orifice de communication entre la première chambre et la source de fluide pneumatique à basse pression.

La présente invention a également pour objet une valve pneumatique caractérisée en ce que l'obturateur est montée en saillie de la jupe dans la première chambre.

La présente invention a également pour objet une valve pneumatique caractérisée en ce que l'obturateur comporte un capuchon en élastomère pour confirmer l'étanchéité du contact entre l'obturateur et la siège.

La présente invention a également pour objet une valve pneumatique caractérisée en ce que l'étanchéité entre la première chambre pneumatique et la seconde chambre pneumatique est réalisée au moyen d'une membrane déroulante fixée à la fois sur le carter et sur la jupe.

La présente invention a également pour objet une valve pneumatique caractérisée en ce que la jupe comporte un premier et un second plateaux, fixés l'un à l'autre et en ce que la membrane déroulante est pincée entre le premier et le second plateaux.

La présente invention a également pour objet une valve pneumatique caractérisée en ce que le fluide pneumatique à haute pression régnant dans la seconde chambre pneumatique est de l'air à pression atmosphérique.

La présente invention a également pour objet un système de freinage comportant un servomoteur d'assistance pneumatique au freinage, un maître-cylindre raccordé de manière étanche à au moins un frein disposés au niveau de roues, une source de vide caractérisé en ce qu'il comporte une valve pneumatique selon la présente invention raccordée de manière étanche à la source de fluide pneumatique à basse pression et au servomoteur, ledit servomoteur formant l'élément pneumatique.

La présente invention a également pour objet un système de freinage caractérisé en ce que ladite source de fluide pneumatique à basse pression est une admission d'air d'un moteur à combustion.

La présente invention a également pour objet un système de freinage selon la caractérisé en ce que ladite source en fluide pneumatique à basse pression est une pompe munie d'au moins une palette entraîné par un moteur électrique.

La présente invention a également pour objet un système de freinage
caractérisé en ce que ladite source de fluide pneumatique à basse pression est une pompe d'au moins une palette entraînée par le moteur d'un véhicule équipé dudit système de freinage.

La présente invention sera mieux comprise à l'aide de la description ci-après et des figures annexées données comme exemples non limitatifs pour lesquelles l'avant et l'arrière correspondent respectivement à la gauche et à la droite des dessins et sur lesquels :
La figure 1 est une vue de détail en coupe d'une valve pneumatique de limitation du niveau de basse pression selon la présente invention ;

La figure 2 est un schéma d'un système de freinage comportant une valve de limitation du niveau de basse pression selon la figure 1.

Les termes « vide » et "dépression » 3 appliqués à des niveau de pression correspondent par exemple pour un servomoteur pneumatique d'assistance au freinage à des pressions inférieures à la pression atmosphérique et en particulier comprise entre 0 Pa et 95000 Pa.

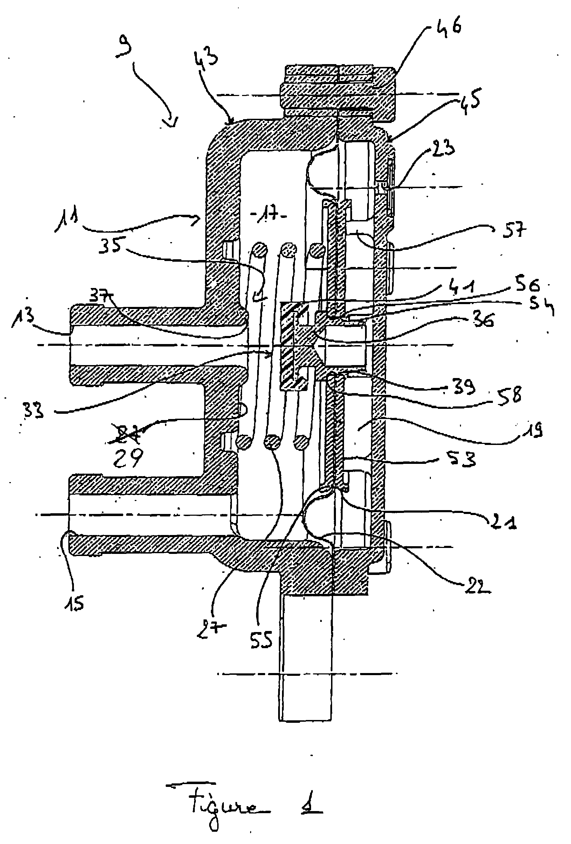

Sur la figure 1 on peut voir une valve 9 selon la présente invention comportant un carter 11 muni d'un premier et d'un second orifices de communication 13, 15 reliés respectivement de manière étanche à une source de vide, par exemple une pompe à vide ou l'alimentation en air d'un moteur à explosion (non représentée), et à un élément utilisant un fluide pneumatique à basse pression (non représenté), par exemple un servomoteur d'assistance pneumatique au freinage, la source de dépression et le servomoteur étant reliés de matière étanche par un conduit d'alimentation (non représenté), la communication entre la source de dépression et l'élément utilisant le fluide pneumatique à basse pression étant susceptible d'être obturé de manière étanche par la valve 9 pour une valeur de pression inférieure à une valeur prédéterminée P.

Le carter 11 est avantageusement formé par une gamelle 43 formant la paroi avant 29 du carter 11 et dans laquelle sont pratiqués les orifices 13 et 15, et un couvercle 45 portant la paroi arrière du carter 11, la gamelle 43 et le couvercle 45 étant reliés l'un à l'autre de manière fixe, par exemple par u.n système vis-écrou 46.

La valve comporte également une première et une seconde chambres pneumatiques 17, 19 séparées de manière étanche par une jupe 21 montée à coulissement dans le carter 11, l'étanchéité étant réalisée par une membrane déroulante 22 fixée à la fois sur le carter et sur la jupe 21, la membrane étant avantageusement réalisée en élastomère, par exemple en caoutchouc. On pourrait cependant prévoir que l'étanchéité soit réalisée par un joint monté sur la périphérie radialement externe de la jupe 21 en glissement sur la paroi interne du carter ou tout autre moyen d'étanchéité.

Dans l'exemple représenté, l'étanchéité entre la gamelle 43 et le couvercle 45 est assurée par l'extrémité radialement externe de la membrane déroulante 22 par pincement entre une extrémité radialement externe du couvercle 45 et une extrémité radialement externe de la gamelle 43.

Mais il est bien entendu envisageable de réaliser l'étanchéité par un joint, par exemple par un joint plat pincé entre les extrémités radialement externes de la gamelle 43 et du couvercle 45.

La première chambre pneumatique 17, que l'on appellera chambre avant est en communication avec la source 3 de dépression et avec l'élément respectivement par des premier et second orifices 13 et 15.

La seconde chambre pneumatique 19 ou chambre arrière est alimente avec un fluide pneumatique à haute pression, par exemple à pression atmosphérique. Dans l'exemple représenté, la seconde chambre 19 est en communication avec l'environnement extérieur et est alimenté avec de l'air à pression atmosphérique par un troisième orifice 23 pratiqué dans le couvercle 45 du carter.

Un moyen élastique de rappel 27, avantageusement un ressort cylindrique est disposé dans la chambre avant 17 monté en compression entre la jupe 21 et une face arrière 27 de la gamelle 43 du carter 11.

La valve comporte également un obturateur 33 porté par la jupe 21 et un siège 35 susceptible de recevoir l'obturateur 33 lorsque la valve 9 ferme la communication entre la source de vide et l'élément alimenté en dépression.

Dans l'exemple de réalisation représenté, le siège 35 est formé par un bourrelet 37 annulaire entourant l'orifice 13 mettant en communication l'intérieur de la chambre avant 17 et la source 3 de fluide de vide. Il est bien entendu qu'il est envisageable d'obturer le second orifice de communication 15 entre le chambre 17 et la source 3 prévu au lieu d'obturer le premier orifice 13, ou bien d'obturer simultanément les premier 13 et second 15 orifices de communication.

L'obturateur 33 est de manière préféré rapporté de manière fixe sur la jupe 21 et vient en contact avec le siège 35, l'obturateur 33 étant avantageusement formé par une pièce de forme sensiblement cylindrique 36 en saillie de la jupe 21 dans la chambre 17.

Dans le mode de réalisation représenté, la jupe 21 comporte un passage 39 dans lequel est montée de manière fixe par sertissage la pièce 36. On peut cependant prévoir que la pièce 36 soit fixé sur la jupe par collage ou vissage.

Il est également envisageable de prévoir que la jupe 21 forme directement obturateur et vienne s'appliquer sur le siège 35, par exemple l'obturateur serait formé par emboutissage s'il est nécessaire que l'obturateur soit en saillie du plan principal contenant la jupe 21.

L'obturateur 33 comporte avantageusement une pièce en caoutchouc 41 de l'obturation, formant capuchon et recouvrant l'extrémité longitudinale avant de la pièce cylindrique 36 pour confirmer l'étanchéité du contact de l'obturateur 33 sur le siège 35.

La jupe 21 est avantageusement formée par un premier et un second disques 53,55 reliés de manière fixe. Dans l'exemple représenté, le premier et le second disques comportent respectivement un orifice central 54,56 dans lequel est monté de manière traversante la pièce 36 formant obturateur 33, le maintien du premier et du second disques 53,55 l'un à l'autre étant réalisé par exemple par sertissage, plus particulièrement par déformation plastique de la périphérie extérieure de la pièce 36 autour des orifices 54,56. Il est également prévu un orifice centrale 58 dans la membrane déroulante 22, l'orifice 58 étant de diamètre sensiblement égal à celui des orifices 54,56 des disques 53,55 et permettant le passage de l'obturateur 33 et la fixation par pincement de la membrane 22 entre le premier et le second disques 53,55.

Cet exemple de réalisation permet avantageusement de réaliser de manière simple à la fois le montage de l'obturateur sur la jupe et le montage de la membrane 22 de manière étanche sur la jupe.

La jupe 21 est avantageusement au repos en appui sur des ergots 57 formés sur la surface intérieure du couvercle 45.

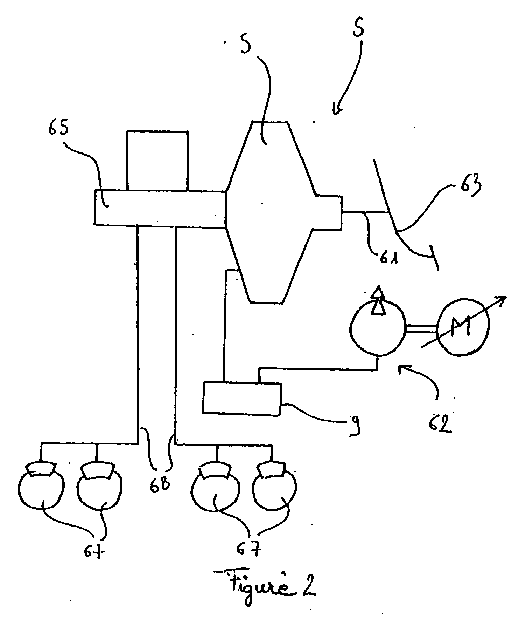

Sur la figure 2, on peut voir un schéma d'ensemble d'un système de freinage S comportant une valve 9 selon la présente invention. Le système S de freinage selon la présente invention comporte un servomoteur 5 d'assistance pneumatique au freinage formant l'élément utilisant l'air à basse pression, et commandé par une tige d'actionnement 61 reliée à une pédale de frein 63 actionnable par le conducteur, un maître cylindre 65 disposé relativement au servomoteur 5 à l'opposé de la pédale de frein 63 et fixé audit servomoteur et reçoit l'assistance fournie par celui par l'intermédiaire d'une tige de poussée (non représentée).

Le maître cylindre 65 est relié de manière étanche par des conduits hydrauliques 68 à au moins un frein 67 disposé au niveau d'une roue, avantageusement quatre freins sur quatre roues. Le servomoteur d'assistance pneumatique au freinage 5 comporte une chambre à dépression (non visible) reliée de manière étanche à une source de vide 3, par exemple une pompe à vide électrique. Entre la pompe à vide 3 et la chambre à dépression du servomoteur est interposée la valve 9 selon la présente invention, la connexion de la vanne 9 à la pompe à vide 3 et au servomoteur 5 est identique à celle décrite pour la figure 1.

La valve , 9 selon la présente invention est avantageusement fixé sur l'enveloppe du servomoteur 5 ou sur l'enveloppe de la source de vide dans le cas où la source 3 est une pompe à vide.

Sur le schéma de la figure 2. la valve 9 n'est pas représentée solidaire du servomoteur ou de la pompe à vide afin de rendre le schéma plus clair.

Le fonctionnement d'un servomoteur et d'un maître-cylindre, ainsi que la coopération du servomoteur avec le maître-cylindre étant bien connus de l'homme du métier, ils ne seront pas décris plus en détail.

Nous allons maintenant décrire le fonctionnement de ladite vanne dans un système de freinage selon la figure 2.

Pour une valeur de pression de l'air obtenu par la pompe à vide supérieure à une valeur prédéterminée P, la chambre à dépression est en communication avec pompe à vide 3 par l'intermédiaire de la chambre 17 de la valve 9 selon la présente invention.

Lorsque la pression fournie par la source de vide 3 est inférieure à la valeur prédéterminée P, et donc la pression régnant dans la chambre 17 est inférieure à la valeur prédéterminée P, la jupe 21 se déplace en translation vers l'avant sous le différentiel de pression régnant entre les chambres 17 et 19, emportant l'obturateur 33 qui vient s'appliquer sur le siège 35 et interrompre la communication entre la source 3 et le servomoteur 5. Ainsi, la pression régnant dans la chambre 17 du servomoteur est fixée sensiblement à la valeur P prédéterminée.

Lorsque la pression dans la chambre 17 augmente, c'est à dire lorsque le servomoteur est sollicitée lors d'une phase de freinage, et que la pression dans la chambre de dépression 17 devient supérieure à la valeur prédéterminée P, l'obturateur 33 se décolle du siège 35 permettant une communication entre la source de vide 3 et la chambre dépression du servomoteur 5 par la source 3 vide. Et ceci jusqu'à ce que la valeur de la pression régnant dans la chambre 17 devienne inférieure à la valeur prédéterminée P.

L'ouverture et la fermeture de la valve 9 et par conséquent la valeur de pression prédéterminée P est égale au produit de la surface de la jupe par la différence de pression régnant entre les chambres 17 et 19 retranché de la charge du ressort 27 au moment où l'obturateur 33 vient en contact du siège 35. Il est ainsi facile de modifier la valeur prédéterminée P de fermeture et d'ouverture de la valve en modifiant la charge du ressort 27.

Dans le mode préféré de réalisation, le ressort 27 est un ressort hélicoïdal cylindrique simple, mais il est bien entendu qu'un ressort hélicoïdale multiple, conique simple ou double ou tout autre type de moyen élastique de rappel convient.

La géométrie du moyen élastique 27 permet pour une valeur de pression supérieure à P de permettre une levée de l'obturateur 33 relativement au siège 35 évitant toute perte de charge entre le servomoteur 5 et la source de dépression 3.

Il est bien entendu que la valve selon la présente invention s'applique à tout système fonctionnant avec un fluide pneumatique à basse pression et nécessitant de limiter à une valeur inférieure la valeur de la basse pression, par exemple 95000 Pa.

On a bien réalisé un valve pneumatique de limitation du niveau de pression dans la chambre à dépression d'un servomoteur pneumatique d'assistance au freinage simple et fiable, et de montage simplifié dans un système de freinage de type connu.

La présente invention s'applique notamment à l'industrie automobile.

La présente invention s'applique principalement à l'industrie de systèmes de freinage pour véhicules automobiles et notamment pour voitures particulières.

## Revendications

1. Valve pneumatique de limitation du niveau de pression d'un fluide pneumatique obtenue par une source de fluide pneumatique à basse pression (3) à un élément pneumatique (5) utilisant ledit fluide pneumatique, ladite valve comportant un carter (11) dans lequel est montée à coulissement étanche, une jupe (21), ladite jupe divisant l'intérieur du carter (11) en une première chambre (17) et en une seconde chambre (19), ledit carter comportant un premier orifice (13) permettant l'alimentation par la source (3) de fluide pneumatique à basse pression de la première chambre (17), un second orifice (15) mettant en communication la première chambre (17) et l'élément (5) et un troisième orifice (23) permettant l'alimentation en fluide pneumatique à haute pression de la seconde chambre (19), la première chambre (17) comportant également des moyens élastiques (27) de rappel de la jupe (21) interposés entre la jupe (21) et le carter (11), **caractérisé en ce que** ladite jupe (21) comporte des moyens obturateurs (33,41) d'au moins un orifices de communication (13,15) entre la source (3) de vide et l'élément (5) pneumatique.

2. Valve pneumatique selon la revendication 1 **caractérisée en ce que** la jupe (21) comporte un obturateur (33) susceptible de coopérer avec un siège (35) formé sur la périphérie du premier orifice (13) de communication entre la première chambre (17) et la source (3) de fluide pneumatique à basse pression.

3. Valve pneumatique selon la revendication 2 **caractérisée en ce que** l'obturateur (33) est montée en saillie de la jupe (21) dans la première chambre (17).

4. Valve pneumatique selon la revendication 2 ou 3 **caractérisée en ce que** l'obturateur (33) comporte un capuchon (41) en élastomère pour confirmer l'étanchéité du contact entre l'obturateur (33) et la siège (35).

5. Valve pneumatique selon l'une quelconque des revendications précédentes **caractérisée en ce que** l'étanchéité entre la première chambre pneumatique (17) et la seconde chambre pneumatique (19) est réalisée au moyen d'une membrane déroulante (22) fixée à la fois sur le carter (11) et sur la jupe (21).

6. Valve pneumatique selon la revendication précédente **caractérisée en ce que** la jupe (21) comporte un premier et un second plateaux (53,55) fixés l'un à l'autre et **en ce que** la membrane déroulante (22) est pincée entre le premier et le second plateaux (53,55).

7. Valve pneumatique selon l'une quelconque des revendications précédentes **caractérisée en ce que** le fluide pneumatique à haute pression régnant dans la seconde chambre pneumatique (19) est de l'air à pression atmosphérique.

8. Système de freinage comportant un servomoteur d'assistance pneumatique au freinage (5), un maître-cylindre (65) raccordé de manière étanche à au moins un frein (67) disposés au niveau de roues, une source de vide (3) **caractérisé en ce qu'**il comporte une valve pneumatique selon l'une quelconque des revendications précédentes raccordée de manière étanche à la source de fluide pneumatique à basse pression (3) et au servomoteur (5), ledit servomoteur (5) formant l'élément pneumatique (5).

9. Système de freinage selon la revendication 8 **caractérisé en ce que** ladite source (3) de fluide pneumatique à basse pression est une admission d'air d'un moteur à combustion.

10. Système de freinage selon la revendication 8 **caractérisé en ce que** ladite source (3) en fluide pneumatique à basse pression est une pompe munie d'au moins une palette entraîné par un moteur électrique (62).

11. Système de freinage selon la revendication 8 **caractérisé en ce que** ladite source (3) de fluide pneumatique à basse pression est une pompe d'au moins une palette entraînée par le moteur d'un véhicule équipé dudit système de freinage.

## Claims

1. Pneumatic valve for limiting the pressure level of a pneumatic fluid obtained from a low pressure pneumatic fluid source (3) by a pneumatic component (5) using the said pneumatic fluid, the said valve comprising a casing (11) in which a skirt (21) is mounted in a fluid-tight sliding manner, the said skirt dividing the interior of the casing (11) into a first chamber (17) and a second chamber (19), the said casing comprising a first orifice (13) allowing the supply of the first chamber (17) from the low pressure pneumatic fluid source (3), a second orifice (15) connecting the first chamber (17) and the component (5) and a third orifice (23) allowing the supply of the second chamber (19) with high pressure pneumatic fluid, the first chamber (17) also comprising elastic means (27) of returning the skirt (21) interposed between the skirt (21) and the casing (11), **characterized in that** the said skirt (21) comprises means (33, 41) of obturating at least one connecting orifice (13, 15) between the vacuum source (3) and the pneumatic component (5).

2. Pneumatic valve according to Claim 1, **characterized in that** the skirt (21) comprises an obturator (33) capable of cooperating with a seat (35) formed on the periphery of the first connection orifice (13) between the first chamber (17) and the low pressure pneumatic fluid source (3).

3. Pneumatic valve according to Claim 2, **characterized in that** the obturator (33) is mounted such that it protrudes from the skirt (21) into the first chamber (17).

4. Pneumatic valve according to Claim 2 or 3, **characterized in that** the obturator (33) comprises an elastomer cap (41) in order to enhance the fluid-tightness of the contact between the obturator (33) and the seat (35).

5. Pneumatic valve according to any one of the preceding claims, **characterized in that** the fluid-tightness between the first pneumatic chamber (17) and the second pneumatic chamber (19) is produced by means of an unrolling membrane (22) fixed both to the casing (11) and to the skirt (21).

6. Pneumatic valve according to the preceding claim, **characterized in that** the skirt (21) comprises a first disk (53) and a second disk (55), fixed to each other, and **in that** the unrolling membrane (22) is clamped between the first disk (53) and the second disk (55).

7. Pneumatic valve according to any one of the preceding claims, **characterized in that** the high pressure pneumatic fluid existing in the second pneumatic chamber (19) is air at atmospheric pressure.

8. Braking system comprising a pneumatic braking assistance servomotor (5), a master cylinder (65) connected in a fluid-tight manner to at least one brake (67) disposed at wheel level and a vacuum source (3), **characterized in that** it comprises a pneumatic valve according to any one of the preceding claims connected in a fluid-tight manner to the low pressure pneumatic fluid source (3) and to the servomotor (5), the said servomotor (5) forming the pneumatic component (5).

9. Braking system according to Claim 8, **characterized in that** the said low pressure pneumatic fluid source (3) is an air intake of a combustion engine.

10. Braking system according to Claim 8, **characterized in that** the said low pressure pneumatic fluid source (3) is a pump provided with at least one vane driven by an electric motor (62).

11. Braking system according to Claim 8, **characterized in that** the said low pressure pneumatic fluid source (3) is a pump having at least one vane driven by the engine of a vehicle equipped with the said braking system.

## Patentansprüche

1. Pneumatisches Ventil zur Begrenzung des Druckniveaus eines pneumatischen Fluids, das von einer Quelle (3) von pneumatischem Fluid mit niedrigem Druck an einem pneumatischen Element (5) erhalten wird, welches das pneumatische Fluid verwendet, wobei das Ventil ein Gehäuse (11) aufweist, in dem eine Schürze (21) so angebracht ist, dass sie in dichter Weise gleitet, wobei die Schürze das Innere des Gehäuses (11) in eine erste Kammer (17) und eine zweite Kammer (19) unterteilt, wobei das Gehäuse eine erste Öffnung (13), die die Speisung der ersten Kammer (17) durch die Quelle (3) von pneumatischem Fluid mit niedrigem Druck ermöglicht, eine zweite Öffnung (15), die die erste Kammer (17) und das Element (5) verbindet, und eine dritte Öffnung (23) aufweist, die die Versorgung der zweiten Kammer (19) mit pneumatischem Fluid mit hohem Druck ermöglicht, wobei die erste Kammer (17) auch elastische Mittel (27) zum Zurückstellen der Schürze (21) aufweist, die zwischen der Schürze (21) und dem Gehäuse (11) angeordnet sind, **dadurch gekennzeichnet, dass** die Schürze (21) Mittel (33, 41) zum Verschließen mindestens einer Öffnung (13, 15) zur Verbindung zwischen der Vakuumquelle (3) und dem pneumatischen Element (5) aufweist.

2. Pneumatisches Ventil nach Anspruch 1, **dadurch gekennzeichnet, dass** die Schürze (21) ein Verschlusselement (33) aufweist, das mit einem Sitz (35) zusammenwirken kann, der am Umfang der ersten Öffnung (13) zur Verbindung zwischen der ersten Kammer (17) und der Quelle (3) von pneumatischem Fluid mit niedrigem Druck gebildet ist.

3. Pneumatisches Ventil nach Anspruch 2, **dadurch gekennzeichnet, dass** das Verschlusselement (33) so angebracht ist, dass es von der Schürze (21) in die erste Kammer (17) hervorsteht.

4. Pneumatisches Ventil nach Anspruch 2 oder 3, **dadurch gekennzeichnet, dass** das Verschlusselement (33) eine Kappe (41) aus Elastomer aufweist, um die Dichtigkeit des Kontakts zwischen dem Verschlusselement (33) und dem Sitz (35) zu verstärken.

5. Pneumatisches Ventil nach einem der vorhergehenden Ansprüche, **dadurch gekennzeichnet, dass** die Dichtigkeit zwischen der ersten pneumatischen Kammer (17) und der zweiten pneumatischen Kammer (19) mittels einer abrollenden Membran (22) gebildet ist, die sowohl am Gehäuse (11) als auch an der Schürze (21) befestigt ist.

6. Pneumatisches Ventil nach dem vorhergehenden Anspruch, **dadurch gekennzeichnet, dass** die Schürze (21) eine erste und eine zweite Platte (53, 55) aufweist, die aneinander befestigt sind, und dass die abrollende Membran (22) zwischen der ersten und der zweiten Platte (53, 55) geklemmt ist.

7. Pneumatisches Ventil nach einem der vorhergehenden Ansprüche, **dadurch gekennzeichnet, dass** das pneumatische Fluid mit dem in der zweiten pneumatischen Kammer (19) herrschenden hohen Druck Luft mit atmosphärischem Druck ist.

8. Bremssystem mit einem pneumatischen Servomotor (5) zur Bremsunterstützung, einem Hauptzylinder (65), der in dichter Weise mit mindestens einer auf Höhe der Räder angeordneten Bremse (67) verbunden ist, und einer Vakuumquelle (3), **dadurch gekennzeichnet, dass** es ein pneumatisches Ventil nach einem der vorhergehenden Ansprüche aufweist, das in dichter Weise mit der Quelle (3) von pneumatischem Fluid mit niedrigem Druck und dem Servomotor (5) verbunden ist, wobei der Servomotor (5) das pneumatische Element (5) bildet.

9. Bremssystem nach Anspruch 8, **dadurch gekennzeichnet, dass** die Quelle (3) von pneumatischem Fluid mit niedrigem Druck ein Lufteinlass eines Verbrennungsmotors ist.

10. Bremssystem nach Anspruch 8, **dadurch gekennzeichnet, dass** die Quelle (3) von pneumatischem Fluid mit niedrigem Druck eine Pumpe ist, die mit mindestens einem Schieber versehen ist und von einem Elektromotor (62) angetrieben wird.

11. Bremssystem nach Anspruch 8, **dadurch gekennzeichnet, dass** die Quelle (3) von pneumatischem Fluid mit niedrigem Druck eine Pumpe mit mindestens einem Schieber ist, die von dem Motor eines mit dem Bremssystem ausgestatteten Fahrzeugs angetrieben wird.
